(19) Europäisches Patentamt
European Patent Office
Office européen des brevets

(11) Veröffentlichungsnummer: **0 373 486**
**A2**

# (12) EUROPÄISCHE PATENTANMELDUNG

(21) Anmeldenummer: **89122431.3**

(51) Int. Cl.$^5$: **C07F 9/50**

(22) Anmeldetag: **05.12.89**

(30) Priorität: **15.12.88 DE 3842161**

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **Preussag Pure Metals GmbH**
**Rammelsberger Strasse 2**
**D-3380 Goslar(DE)**

(72) Erfinder: **Hofmann, Hartmut, Dr. c/o Chemetall GmbH**
**Reuterweg 14**
**D-6000 Frankfurt a. Main(DE)**
Erfinder: **Dembowski, Udo, Dipl.-Chem.**
**Im Schliepas 28**
**D-3410 Northeim(DE)**
Erfinder: **Wittmeier, Ralf**
**Steinbergstrasse 25**
**D-3418 Uslar(DE)**

(74) Vertreter: **Rücker, Wolfgang, Dipl.-Chem.**
**Hubertusstrasse 2**
**D-3000 Hannover 1(DE)**

## (54) Hochreine Alkyl- und Arylphoshine für Gasphasenepitaxie-Prozesse.

(57) Beschrieben wird ein Verfahren zur Herstellung von hochreinem Alkyl- und Arylphosphin für Gasphasenepitaxie-Prozesse durch Reduktion von Alkyl- und Arylphosphinsäure- oder Alkyl- und Arylphosphonsäure-Derivaten mit substituierten Alkalimetallaluminiumhydriden in einem hochsiedenen Lösungsmittel wie 1-Methylnaphthalin.

EP 0 373 486 A2

## Hochreine Alkyl- und Arylphosphine für Gasphasenepitaxie-Prozesse

Die Erfindung betrifft ein Verfahren zur Darstellung von hochreinem Alkyl- und Arylphosphin für Gasphasenepitaxie-Prozesse durch Reduktion von Alkyl- und Arylphosphonsäure- bzw. Alkyl- und Arylphosphinsäure-Derivaten.

In der Elektronikindustrie wird für diverese Anwendungen im Bereich der Bauelemente-Herstellung -vorwiegend zum Dotieren von Silicium- das hochtoxische gasförmige Phosphin eingesetzt, in neuerer Zeit aber auch zunehmend zur Herstellung von dünnen Verbindungshalbleiterschichten wie z.B. GaInAsP für optoelektronische Zwecke. Dabei werden die etablierten Verfahren "Metal Organic Vapor Phase Epitaxy" und als neuestes auch "Metal Organic Molecular Beam Epitoxy" verwendet. Wegen des sehr hohen Gefahrenpotential -der Giftigkeit des Phosphins und der Selbstentzündbarkeit des immer mitgebildeten Diphosphins- sowie des gasförmigen Aggregatzustandes bei der Anwendungstemperatur besteht die dringende Notwendigkeit eine ungefährlichere und praktikablere Phosphordotierungsquelle zu beschreiben.

In letzter Zeit wurde als Phophordotierungsquelle t-Butylphosphin (TBP) als phosphororganisches Hydrid genannt.

Die Schwierigkeit bestand nur darin, um diese Substanz für die o.a. Anwendung zu prädestinieren, daß sie nicht genügend rein in Bezug auf Nebenbestandteile synthetisiert werden konnte.

Die schon länger bekannten klassischen Methoden zu ihrer Synthetisierung ergaben Probleme nicht nur wegen der aufwendigen Herstellungsverfahren und der nur geringen Ausbeuten, sondern vor allen Dingen durch die Verwendung schlecht rein zu gewinnender Ausgangssubstanzen.

Aufgabe der Erfindung ist es daher, ein hochreines Alkyl- und Arylphosphin für die eingangs beschriebenen Verfahren zu produzieren, die in einem einfachen Reaktionsprozeß herstellbar sind, derart, daß die Alkyl-und Arylphosphine als Endprodukt in hoher Ausbeute ohne Trennprobleme leicht isoliert werden können.

Gelöst wird die Aufgabe durch die in den Ansprüchen angegebenen Verfahrensmaßnahmen. Erfindungsgemäß werden als phosphorhaltige Ausgangsmaterialien Phosphin- und Phosphonsäurederivate verwendet z.B. Säuredihalogenide, wobei das Halogenid Fluorid, Bromid, Chlorid und Jodid bedeuten kann oder Esterverbindungen, wobei die organischen Reste aus lineraren und/oder cyclischen Alkyl- oder aber Arylgruppen bestehen, die auch noch substituiert sein können. Das heißt, die organischen Reste können einheitlich oder völlig unterschiedlich sein.

Eingesetzt werden darüber hinaus die entsprechenden durch Kohlenwasserstoffbrücken verbundenen bisanalogen Verbindungen, wobei hier ebenfalls alle oben aufgezählten Halogenide als Säuredihalogenide eingesetzt werden können. Sowohl linerare als auch cyclische Kohlenwasserstoffe als auch aromatische Systeme können wieder als Esterreste fungieren, auch in Kombination miteinander.

Eingesetzt werden auch die analogen Di-Phosphonsäure-Derivate.

1. 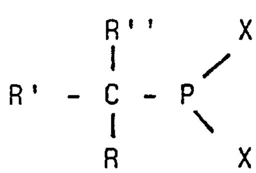 ; 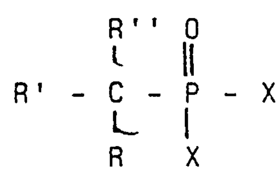

(X = F, Cl, Br, J)

2. 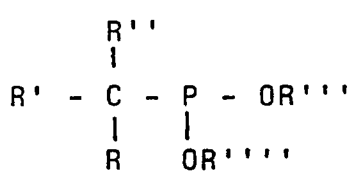 ; 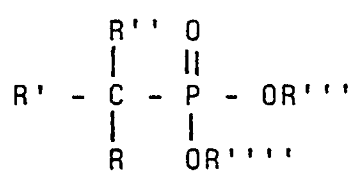

(R, R′, R″, R‴, R⁗ = niederwertige, lineare und/oder cyclische Alkyl-Gruppen und/oder Aryl-Gruppen, auch

substituierte)

3. 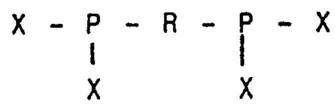 ; 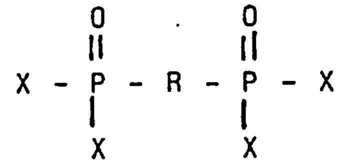

(X = F, Cl, Br, J)
(R = niederwertige, lineare und/oder cyclische Alkyl-Gruppe und/oder Aryl-Gruppen, auch substituierte)

4. 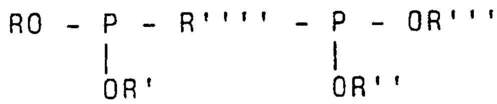

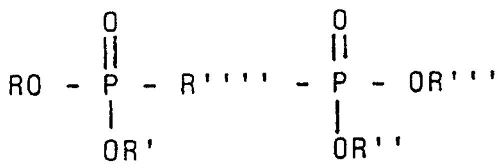

(R, R′, R″, R‴, R⁗ = niederwerige lineare und/oder cyclische Alkyl-Gruppen und/oder Aryl-Gruppen, auch substituierte)

5. 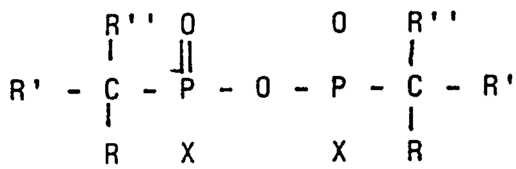

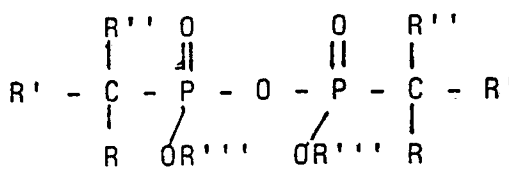

(X = F, Cl, Br, J)
(R, R′, R″, R‴ = niederwertige lineare und/oder cyclische Akyl-Gruppen und/oder Aryl-Gruppen, auch substituierte)

Als Reduktionsmittel kommen substituierte Alkalimetallaluminiumhydride erfolgreich zum Einsatz, z.B. Natrium-bis-2(methoxy-ethoxy)-dihydridoaluminat.

Wichtig ist vor allen Dingen auch das verwendete Lösungsmittel, da sich hochreine Alkyl- und Arylphosphine und -phosphone durch Destillation nur dann relativ einfach aus diesem entfernen lassen, wenn die Siedetemperaturdifferenzen entsprechend weit auseinander liegen. Es wurde entdeckt, daß z.B. 1-Methyl-Naphthalin mit einem Siedepunkt von 242 °C sehr gut für Zwecke geeignet ist, da es auch bei etwas tieferen Temperaturen noch flüssig ist: es erstarrt erst bei -22 °C. Es empfiehlt sich als Lösungsmittel der

Wahl auch noch aus folgendem Grund, da zwar ein an dessen Stelle verwendeter Ether und/oder etherhaltiges Lösungsmittel ebenfalls in dem gesamten Temperaturbereich flüssig sind, aber Ether führen selbst in geringsten Spuren bei Eptaxie-Prozessen noch zu Störungen.

Bei Verwendung eines solchen Lösungsmittels kann das TBP z. B. direkt aus dem Reaktionsansatz durch Destillation separiert werden, was auch unter sehr schonenden Bedingungen vorgenommen werden kann. Das beispielsweise so gewonnene TBP fällt in guten Ausbeuten an und besitzt eine entsprechende hohe chromatographische und spurenanalytische Reinheit.

Die folgenden Beispiele erläutern die einfache Darstellungsweisen:

1.Beispiel:

Zu 344 g (1,7 mol) Natrium-bis-(2-methoxy-ethoxy)-dihydridoaluminat in 2000 ml 1-Methylnaphthalin tropft man zwischen 20 °C und 90 °C eine Lösung von 130 g (0,74mol) t-Butylphosphonsäuredichlorid in 420 ml 1-Metylnaphthalin. Dabei wird das Produkt in einer Kühlfalle gesammelt. Weiteres Produkt kann durch Anlegen von Vakuum isoliert werden. Ausbeute 50 g (75 %) hochreines t-Butylphosphin.

2. Beispiel:

Zu 344 g (1,70 mol) Natrium-bis-(2-methoxy-ethoxy)-Dihydridoaluminat in 200 ml 1-Methylnaphthalin tropft man zwischen 20 °C und 90 °C eine Lösung von 99 g (0,57mol) 2-Butylphosphinsäuredichlorid in 200 ml 1-Methylnaphtalin. Dabei wird das Produkt in einer Kühlfalle gesammelt. Weiteres Produkt kann durch Anlegen von Vakuum isoliert werden. Ausbeute 36 g (71 %) hochreines 2-Butylphosphin.

3. Beispiel:

Zu 168 g (0,84 mol) Natrium-bis-(2-methoxy-ethoxy)-dihydridoaluminat in 400 ml 1-Methylnaphthalin tropft man zwischen 20 °C und 90 °C eine Lösung von 118 g (0,66mol) Phenylphosphordichlorid in 300 ml 1-Methylnaphthalin. Nach vollendeter Reaktion wird das Produkt duch Anlegen von Vakuum isoliert. Ausbeute 49 g (68 %) hochreines Phenylphosphin.

## Ansprüche

1. Verfahren zur Darstellung von hochreinem Alkyl-und Arylphosphin für Gasphasenepitaxie-Prozesse, **dadurch gekennzeichnet**, daß man in einem hochsiedenden Kohlenwasserstoff entweder Alkyl- und Arylphosphinsäure- oder Alkyl- und Arylphosphonsäure-Derivate mit einem substituierten Alkalimetallaluminiumhydrid reduziert.

2. Verfahren nach Anspruch 1, **dadurch gekennzeichnet**, daß als zu reduzierende Alkyl- und Arylphosphinsäure- bzw. als Alkyl- und Arylphosphonsäure-Derivate die Säuredihalogenide verwendet werden.

3. Verfahren nach Anspruch 1, **dadurch gekennzeichnet**, daß als zu reduzierende Alkyl- und Arylphosphinsäure-bzw. als Alkyl- und Arylphosphonsäure-Derivate die die vollständig veresterten Verbindungen verwendet werden.

4. Verfahen nach Anspruch 1 bis 3, **dadurch gekennzeichnet**, daß als zu reduzierende Alkyl- und Arylphosphinsäure- bzw. als Alkyl- und Arylphosphonsäure-Derivate die bis-analogen Verbindungen verwendet werden.

5. Verfahren nach Anspruch 2 und 3, **dadurch gekennzeichnet**, daß als zu reduzierende Alkyl- und Arylphosphonsäure-Derivate die analogen Di-Phosphonsäureverbindungen verwendet werden.

6. Verfahren nach Anspruch 1 bis 5, **dadurch gekennzeichnet**, daß als hochsiedendes Lösungsmittel 1-Methyl-Naphthalin verwendet wird, in welchem die salzartigen Rückstände löslich sind.

7. Verfahren nach Anspruch 1, **dadurch gekennzeichnet**, daß als substituiertes Alkalimetallaluminiumhydrid Natrium-bis-(2-methoxy-ethoxy)-dihydridoaluminat verwendet wird.